# EUROPÄISCHE PATENTSCHRIFT

(11) **EP 0 767 243 B1**
(45) Veröffentlichungstag und Bekanntmachung des Hinweises auf die Patenterteilung: **13.02.2002**
(21) Anmeldenummer: 96115626.2
(22) Anmeldetag: 30.09.1996
(51) Int. Cl.: C22B 7/00, C22B 1/08, C22B 11/02, B01J 38/42

(54) **Rückgewinnung von Aktivkomponenten aus Trägerkatalysatoren oder Vollkatalysatoren**
Recovery of active components from carrier or monolythic catalysts
Récupération des éléments actifs d'un catalyseur sur support ou d'un catalyseur monolythique

(30) Priorität: 07.10.1995 DE 19537447
(43) Veröffentlichungstag der Anmeldung: 09.04.1997
(73) Patentinhaber: BASF Aktiengesellschaft, 67063 Ludwigshafen (DE)
(72) Erfinder: Hagemeyer, Alfred, Dr., 48431 Rheine (DE); Eller, Karsten, Dr., 67059 Ludwigshafen (DE)

(56) Entgegenhaltungen:
- EP-A- 0 017 285
- WO-A-94/02653
- DE-A- 4 305 647
- FR-A- 724 905
- FR-A- 1 457 779
- GB-A- 434 897
- GB-A- 2 000 755
- GB-A- 2 214 173
- RESOURCES, CONSERVATION AND RECYCLING, Bd. 10, Nr. 1/2, April 1994, AMSTERDAM, NL, Seiten 87-96, XP000460642 I. GABALLAH ET AL.: "Valuable metals recovery from spent catalysts by selective chlorination"

## Beschreibung

Die vorliegende Erfindung betrifft ein Verfahren zur Rückgewinnung von Aktivkomponenten aus Trägerkatalysatoren oder Vollkatalysatoren durch Umsetzung mit einem im wesentlichen wasserfreien Halogenwasserstoff und gegebenenfalls fraktionierender Trennung.

Aus der DE-A-43 02 992 ist die Rückgewinnung von Metallkomponenten aus Katalysatoren mit wäßrigen Säuren oder Basen und aus der US-A-5 399 322 die Extraktion mit Lösungsmitteln bekannt.

Aus der EP-A-497 759 ist die Rückgewinnung von Rhodium durch Extraktion eines Katalysators mit einer Kombination aus Methyliodid, wäßrigem Wasserstoffiodid und elementarem Iod in der Flüssigphase bekannt, wobei in der Rhodium-enthaltenden Extraktionsmischung mindestens 1 Mol I₂ pro Mol Rhodium enthalten ist.

Aus Metallurgical and Materials Transactions/B, Vol. 25B (1994), Seite 481 bis 490 ist die Rückgewinnung von Metallen aus verbrauchten Reformierungskatalysatoren durch Röstung und nachfolgende Chlorierung mit Chlor und Luft, Stickstoff oder Kohlenmonoxid bekannt. Dabei konnten 80 % Nickel und Cobalt, 95 % Molybdän und 80 % Vanadin wiedergewonnen werden. Die Cobalt- und Nickel-Chloride wurden mit angesäuertem Wasser ausgelaugt, die Molybdän- und Vanadin-Chloride wurden durch Kondensation aus der Gasphase gewonnen.

Aus dem Report No. RI9252, U.S. Bureau of Mines, U.S. Department of Interior, Aug. 1989 ist die Chlorierung von Nickel-, Cobalt- und Molybdänoxiden auf Al₂O₃-Trägern mit Chlor und Kohlenmonoxid oder Luft in Wirbelschichtreaktoren bekannt. Es konnte 95 % Molybdän aus dem Kondensat zurückgewonnen werden sowie 83 bis 91 % Nickel und 61 bis 94 % Cobalt durch Hydrolyse aus dem chlorierten Rückstand abgetrennt werden. Eine unerwünschte Nebenreaktion stellte allerdings der Angriff des Trägers durch Chlor dar, so daß 4 bis 36 % Aluminium-Verbindungen ausgetragen wurden.

Aus der EP-A-17 285 ist ein Verfahren zur Gewinnung von Molybdän, Vanadin und Aluminium aus gebrauchten Katalysatoren durch Behandlung mit einer Mischung aus elementaren Chlor (Cl₂), Chlorwasserstoff (HCl) und Wasserdampf bekannt. Nachteilig an dieser Aufarbeitungsmethode ist der Einsatz von elementarem Chlor (Cl₂), das wegen seiner Aggressivität einen hohen apparativen Materialaufwand erfordert.

FR-A-724 905 erwähnt die Verwendung von Chlor, Chlorwasserstoffgas und deren Gasgemischen in Gegenwart von Luft zur Extraktion von Molybdän und Wolfram aus Erzen. Dort wird in allen Beispielen nur mit elementarem Chlor - und nicht mit Chlorwasserstoff - in Gegenwart von Sauerstoff und Kohlenstoff Molybdän, Wolfram und Vanadin aus Altkatalysatoren und Erzmaterialien gewonnen.

In GB-A-434 897 wird ausdrücklich auf Seite 4, Zeile 71ff darauf hingewiesen, daß Chlorwasserstoff und elementares Chlor nicht als äquivalent betrachtet werden können bei der Extraktion von Nickel aus Lateriterzen mittels Chlorierung.

Nachteilig an den zuvor beschriebenen Verfahren ist der Einsatz von teuren und aggressiven Halogenen.

Aus der DE-A-43 05 647 ist ein Verfahren zur Rückgewinnung von Wertmetallen aus gebrauchten Abgaskatalysatoren durch Zugabe eines Alkalichlorids in eine Chlorgasatmosphäre bekannt, wonach die gebildeten Hexachlorokomplexe der Metalle der Platingruppe mit verdünnter Salzsäure extrahiert werden. Nachteilig an diesem Verfahren ist die Aufarbeitung der Metalle mit wäßriger Salzsäure.

Keines dieser Verfahren arbeitet unter Erhalt des Trägers in seiner ursprünglichen Form (Stränge, Tabletten, etc.). Dies wäre aus ökonomischen Gründen wünschenswert.

Der vorliegenden Erfindung lag daher die Aufgabe zugrunde, den zuvor genannten Nachteilen abzuhelfen.

Demgemäß wurde ein neues und verbessertes Verfahren zur Rückgewinnung von Aktivkomponenten aus Trägerkatalysatoren gefunden, welches dadurch gekennzeichnet ist, daß man
a) Trägerkatalysatoren mit Aktivkomponenten aus der Gruppe Silber, Yttrium, Zinn, Zink, Indium, Antimon, Niob oder deren Gemische oder
b) Trägerkatalysatoren mit Aktivkomponenten aus der Gruppe Kupfer, Eisen, Ruthenium, Cer, Wismut, Nickel, Cobalt, Gallium, Neodym, Vanadin, Molybdän, Titan, Zirkon, Wolfram, Platin, Palladium, Antimon, Silber, Yttrium, Zinn, Zink, Indium, Niob, Mangan, Chrom, Lanthan oder deren Gemische im wesentlichen in Abwesenheit von Sauerstoff
mit einem im wesentlichen wasserfreien Halogenwasserstoff bei Temperaturen von 20 bis 900°C und einem Druck von 0,01 bis 10 bar umsetzt und gegebenenfalls fraktionierend bei Temperaturen von 50 bis 900°C und einem Druck von 0,001 bis 5 bar trennt.

Das erfindungsgemäße Verfahren kann wie folgt durchgeführt werden:

Man kann den Trägerkatalysator mit Aktivkomponenten
a) aus der Gruppe Silber, Yttrium, Zinn, Zink, Indium, Antimon, Niob oder deren Gemische in Abwesenheit oder bevorzugt in Anwesenheit von Sauerstoff oder
b) aus der Gruppe Kupfer, Eisen, Ruthenium, Cer, Wismut, Nickel, Cobalt, Gallium, Neodym, Vanadin, Molybdän, Titan, Zirkon, Wolfram, Platin, Palladium, Antimon, Silber, Yttrium, Zinn, Zink, Indium, Niob, Mangan, Chrom, Lanthan oder deren Gemische im wesentlichen in Abwesenheit von Sauerstoff, d.h. 0 bis 0,5 Vol.-%, bevorzugt 0 bis 0,05 Vol.-%, besonders bevorzugt in vollständiger Abwesenheit (0 Vol.-%),
beispielsweise in einem Rohrreaktor bei Temperaturen von 20 bis 900°C, bevorzugt 100 bis 850°C, besonders bevorzugt 150 bis 700°C und einem Druck von 0,01 bis 10 bar, bevorzugt 0,1 bis 2 bar, besonders bevorzugt bei Atmosphärendruck (Normaldruck) mit einem im wesentlichen wasserfreien, d.h. 0 bis 2 Gew.-%, bevorzugt 0 bis 0,5 Gew.-%, besonders bevorzugt in vollständiger Abwesenheit (0 Gew.-%), Halogenwasserstoff, bevorzugt Fluorwasserstoff, Chlorwasserstoff, Bromwasserstoff oder deren Gemische, besonders bevorzugt Chlorwasserstoff, bevorzugt in gasförmiger Form, und gegebenenfalls einem inerten Verdünnungsgas umsetzen. Gegebenenfalls können bevorzugt die Aktivkomponenten bei Temperaturen von 50 bis 900°C, bevorzugt 100 bis 850°C, besonders bevorzugt 150 bis 800°C und einem Druck von 0,001 bis 5 bar, bevorzugt 0,01 bis 2 bar, besonders bevorzugt 0,1 bis 2 bar fraktioniert werden. Je nach Reaktionsbedingungen und Stoffeigenschaften können die Aktivkomponenten entweder direkt ausgetragen werden oder in einem zweiten, räumlich oder zeitlich getrennten Schritt z.B. bei erhöhter Temperatur fraktioniert ausgetragen werden. Dabei kann der Katalysatorträger von Aktivkomponenten befreit wiedergewonnen werden.

Eine mehrfache HCl-Beladung und Verflüchtigung ist ebenfalls möglich, um eine höhere Trennschärfe zu erreichen, wobei jeder einzelne Recyclingschritt unter verschiedenen experimentellen Bedingungen erfolgen kann, z.B. Aktivkomponentenaustrag bei jeweils unterschiedlichen Temperaturen und/oder in unterschiedlichen Atmosphären.

So kann man in periodischer Betriebsweise arbeiten, beispielsweise durch HCl-Beladung und anschließende Spülung mit einem Inertgas. Die Regenerierung kann mit Luft oder reinem Sauerstoff (Dechlorierung) und anschließender Spülung mit einem Inertgas erfolgen. Dieser Zyklus kann so oft wie nötig wiederholt werden. Das Ausmaß des Aktivkomponentenaustrags kann an der Reaktorausbauprobe durch chemische Analyse ermittelt werden.
- Zweistufige Verfahrensvariante: gekoppelt mit fraktionierter Verdampfung:
   Die HCl-Beladung kann unter Bedingungen erfolgen, bei der die gewünschten Aktivkomponenten chloriert, aber noch nicht ausgetragen werden. Anschließend können die Chloride der Aktivkomponenten fraktioniert verdampft werden. Schwerflüchtige Chloride können durch Auslaugen des Rückstands mit geeigneten Lösungsmitteln wie wäßrigen Säuren oder Basen wie z.B. HCl, HNO₃, H₂SO₄, NH₃, NaOH oder KOH, abgetrennt werden. Eine erneute HCl-Beladung des Rückstands unter verschärften Reaktionsbedingungen zur Gewinnung der schwerer chlorierbaren Komponenten ist ebenfalls möglich.
- Einstufige Verfahrensvariante: stationär mit fraktionierter Kondensation:
   Die HCl-Beladetemperatur kann so gewählt werden, daß sich einzelne Aktivkomponentenchloride schon während der Beladung oder im HCl-Gasstrom verflüchtigen und über eine fraktionierte Kondensation der Dampfphase in die Einzelkomponenten aufgetrennt werden.

Für eine möglichst gute Fraktionierung ist es nötig, daß die einzelnen Metallchloride keine chemischen Reaktionen mit sich und/oder dem Träger zu nicht verdampfbaren Verbindungen eingehen und keine Azeotrope bilden.

Das Verhältnis der Volumenprozente von Chlorwasserstoff zum inerten Verdünnungsgas beträgt in der Regel 100:0 bis 5:95, bevorzugt 100:0 bis 10:90, besonders bevorzugt 100:0 bis 20:80.

Als inertes Verdünnungsgas eignet sich Stickstoff, Kohlendioxid oder die Edelgase wie Argon, bevorzugt Stickstoff und Kohlendioxid, besonders bevorzugt Stickstoff.

Die HCl-Gasbelastung liegt in der Regel im Bereich von 50 bis 5.000 h⁻¹, die Beladedauer beträgt in der Regel 2 bis 180 Minuten, der Elementaustrag dauert in der Regel 5 bis 600 Minuten.

Als Aktivkomponenten eignen sich metallische oder oxidische Aktivkomponenten der Elemente Kupfer, Eisen, Ruthenium, Cer, Wismut, Nickel, Cobalt, Gallium, Neodym, Vanadin, Molybdän, Titan, Zirkon, Wolfram, Zink, Platin, Palladium, Antimon, Silber, Yttrium, Zinn, Indium, Niob, Mangan, Chrom, Lanthan oder deren Gemische, bevorzugt Kupfer, Eisen, Ruthenium, Cer, Wismut, Nickel, Cobalt, Gallium, Neodym, Vanadin, Molybdän, Antimon oder deren Gemische, besonders bevorzugt Kupfer, Vanadin, Molybdän.

Vanadin und Molybdän werden in der Regel schnell chloriert. Die gebildeten (Oxo)Chloride (z.B. Vanadylchlorid VOCl₃) weisen eine sehr hohe Flüchtigkeit auf. Die (Oxo)-Chloride werden zum Teil schon bei der HCl-Beladung ausgetragen, so daß sich bei diesen Elementen die einstufig stationäre Reaktionsführung, d.h. kontinuierliche Beaufschlagung mit dem HCl-Gasstrom und fraktionierte Kondensation, anbietet.

Bei Mangan, Chrom und Lanthan empfiehlt sich ein vorgeschalteter Reduktionsschritt, wie die Behandlung mit H₂ oder Kohlenmonoxid, bevor das erfindungsgemäße Verfahren eingesetzt wird. Ausgetragen werden dann die niedervalenten Metallchloride.

Bei Silber, Yttrium, Zinn, Zink, Indium, Antimon und Niob kann die Fraktionierung auch in sauerstoffhaltiger Atmosphäre wie Luft durchgeführt werden.

Als Katalysatorträger eignen sich beispielsweise SiO₂, Al₂O₃, TiO₂, ZrO₂, SiC, Si₃N₄, Zeolithe aller Art wie Faujasite, Pentasile, Beta-Zeolithe, engporige Zeolithe, hydrothermal hergestellte Phosphate mit Zeolith-Struktur, Tone, Pillared Clays, Silikate oder deren Gemische.

### Beispiele

### Herstellung der Trägerkatalysatoren

### Katalysator A

### Kupfer/Eisen auf SiC

25 Gew.-% CuCl₂, 25 Gew.-% KCl, 25 Gew.-% FeCl₃ und 25 Gew.-% NaCl wurden in destilliertem Wasser gelöst und anschließend zur Trockene eingedampft. 74 g des vermahlenen Pulvers wurden mit 240 g SiC-Pulver trocken gemischt, geknetet und zu 3 mm Vollsträngen verstrangt. Nach 2 h Trocknung bei 120°C und 2 h Calcinierung bei 450°C erhielt man einen Trägerkatalysator mit 11,8 Gew.-% Kupfer und 8,6 Gew.-% Eisen auf SiC mit einer Schneidehärte von 38 N und einer BET-Oberfläche von 18 m²/g.

### Katalysator B

### Vanadin auf SiO₂

### Herstellung des SiO₂-Gels

200 g Ethanol wurden mit 200 g Tetramethoxysilan (DYNASIL®, Firma Hüls) gemischt, portionsweise insgesamt 400 g destilliertes Wasser und 5,75 ml 0,1 n Flußsäure hinzugegeben, 15 min gerührt und bei 60°C auspolymerisiert. Nach Einengung i.Vak. (80°C/20 mbar) wurde 12 h an der Luft bei 500°C calciniert. Man erhielt 76,7 g SiO₂-Gel-Träger mit einer BET-Oberfläche von 764 m²/g.

### Imprägnierung des SiO₂-Gel-Trägers mit VOCl₃

15 g des SiO₂-Gel-Trägers wurden mit 7,2 g VOCl₃ gemischt, in einer geschlossenen Apparatur 2 h stehen gelassen und anschließend 12 h bei 250°C an der Luft getrocknet. Man erhielt 16,9 g eines Trägerkatalysators mit 7,3 Gew.-% Vanadin auf SiO₂ und einer BET-Oberfläche von 400 m²/g.

### Katalysator C

### Molybdänoxidvollkatalysator

200 g Ammoniumheptamolybdat [(NH₄)₆Mo₇O₂₄ * 4 H₂O] wurde mit 3 Gew.-% Methylcellulose geknetet, 2 h bei 120°C getrocknet und 2 h bei 500°C calciniert. Man erhielt 163 g eines Molybdänoxidvollkatalysators mit einer BET-Oberfläche von 1,3 m²/g.

### Katalysator D

### Supported Liquid Phase (SLP)-Tränkkatalysator: Kupfer und Eisen auf KCl/NaCl/SiC

47,3 g des SiC-Trägers wurde entsprechend seiner Wasseraufnahme von 0,7 ml/g mit einer Lösung aus 12,4 g CuCl₂•2H₂O, 4,9 g KCl, 36,2 g FeCl₃•6H₂O, 12,1 g NaCl und 133,6 ml destilliertem Wasser imprägniert. Nach 16 h Trocknung bei 120°C und 3 h Calcinierung bei 450°C erhielt man einen SLP (Supported Liquid Phase)-Tränkkatalysator mit 5,4 Gew.-% Kupfer, 7,9 Gew.-% Eisen, 2,9 Gew.-% Kalium und 2,6 Gew.-% Natrium auf SiC.

### Katalysator E

### Supported Liquid Phase (SLP)-Tränkkatalysator: Kupfer und Eisen auf KCl/Al₂O₃

252 g des Al₂O₃-Trägers (Ringtabletten) wurde entsprechend seiner Wasseraufnahme von 0,64 ml/g mit einer Lösung aus 80,5 g CuCl₂•2H₂O, 35,2 g KCl und 160 ml destilliertem Wasser imprägniert. Nach 16 h Trocknung bei 120°C und 3 h Calcinierung bei 350°C erhielt man einen SLP (Supported Liquid Phase)-Tränkkatalysator mit 8,4 Gew.-% Kupfer und 5,1 Gew.-% Kalium auf Al₂O₃₋ Ringen von 7*7*3 mm und einer BET-Oberfläche von 83 m²/g.

### Katalysator F

### Tränkkatalysator: Antimon auf KCl/Al₂O₃

250 g Al₂O₃-Träger (7*7*3 mm Ringtabletten) wurde entsprechend seiner Wasseraufnahme von 0,46 ml/g mit einer Lösung aus 54 g SbCl₃, 17,6 g KCl und 225 ml destilliertem Wasser, das mit Salzsäure angesäuert wurde, imprägniert. Nach 16 h Trocknung bei 120°C und 3 h Calcinierung bei 450°C erhielt man einen Tränkkatalysator mit 9 Gew.-% Antimon und 2,9 Gew.-% Kalium auf Al₂O₃ mit einer BET-Oberfläche von 111 m²/g.

### Beispiele 1 bis 6

In einem Röhrenreaktor mit 20 ml Katalysator-Festbett-Schüttung von 0,5 bis 1 mm Splittfraktionen wurde in der Beladephase (Chlorierung) mit einem trockenen HCl-Gasstrom, evtl. verdünnt in Stickstoff mit HCl-Gasbelastungen von 50 bis 5.000 h⁻¹ gearbeitet.

Die Analytik erfolgte durch on-line IR für die HCl-Detektion und durch on-line UV für die Chlor-Detektion im Reaktoraustragsgas.

Die ausgetragenen Metallhalogenide wurden entweder in wechselweise zugeschalteten Kühlfallen kondensiert und gesammelt oder in einer Nachschüttung aus reinem, d.h. unbeladenem und unbeheiztem Katalysatorträger aufgefangen.

### Beispiel 1

### Cu-Austrag im HCl-Strom

Der Katalysator A wurde über insgesamt 3 Zyklen, jeweils bestehend aus den 4 Schritten Chlorierung mit 25 % HCl-Gas bei einer Belastung von 1000 h⁻¹, Gegenstromspülung mit CO₂, Regenerierung (Dechlorierung) mit Sauerstoff, Spülen mit N₂, gefahren. Die HCl-Beladedauer betrug zwischen 3,5 und 7 min. Bei jedem Zyklus wurde bis zum HCl-Durchbruch beladen. Beladung und Dechlorierung erfolgten isotherm bei 400°C.

In der nachgeschalteten KühIfalle wurde schon beim 1. Zyklus ein geringer Austrag von Cu-Chloriden festgestellt.

In HCl-Atmosphäre weist Kupferchlorid eine hohe Flüchtigkeit auf, so daß es bei Temperaturen > 400°C schon bei der Beladung teilweise ausgetragen wird. Bei Beladetemperaturen < ca. 300°C fand dagegen noch kein nennenswerter Kupferaustrag statt.

Es fand nur eine selektive Chlorierung der Metalle statt. Der SiC-Träger wurde nicht angegriffen

### Beispiel 2

### Vanadinaustrag im HCl-Strom

Über den Katalysator B wurde bei 300°C ein 25 %iger HCl-Gasstrom in N₂ geleitet. Die Beladedauer betrug 45 min. Anschließend wurde für 40 min mit N₂ gespült. Unter diesen Bedingungen wurden erhebliche V-Mengen ausgetragen. In der nachgeschalteten Kühlfalle wurden Vanadin- bzw. Vanadylchloride gefunden.

Anschließend wurde der Katalysator bei 300°C für 150 min mit Luft regeneriert. Die Kühlfalle wurde gewechselt. Danach wurde die Reaktortemperatur auf 330°C erhöht und der Katalysator erneut 50 min lang mit einem 25 %igen HCl-Gasstrom beaufschlagt. Es folgte eine 30minütige Spülphase. Wiederum wurde Austrag von Vanadinchloriden festgestellt, die in der Kühlfalle aufgefangen wurden.

Nach Regenerierung mit Luft für 180 min wurde die Probe ausgebaut und analysiert. Die Reaktorausbauprobe enthielt kein Vanadin mehr, das demnach vollständig ausgetragen wurde. Zurück blieb der weiße reine Träger.

### Beispiel 3

### Molybdänaustrag im HCl-Strom

Über den Katalysator C wurde bei 400°C ein 25 %iger HCl-Gasstrom geleitet. Die Beladedauer betrug 24 min. Anschließend wurde für 16 min mit N₂ gespült.

Unter diesen Bedingungen wurden erhebliche Mo-Mengen ausgetragen. In der nachgeschalteten Kühlfalle wurde MoO₂Cl₂ gefunden. Daneben schieden sich die abgedampften Mo-Chloride auch in den reaktorausgangsseitigen Abgasleitungen nieder und führten so zu einem Druckanstieg nach Reaktor von ca. 100 mbar auf ca. 700 bis 800 mbar.

### Beispiel 4

### Kupferaustrag im HCl-Strom

Der Katalysator D wurde im Temperaturbereich von 425 bis 460°C über insgesamt 8 Zyklen, jeweils bestehend aus den 4 Schritten Chlorierung mit 100 % HCl-Gas, Spülen mit CO₂, Regenerierung (Dechlorierung) mit Sauerstoff, Spülen mit CO₂, gefahren. Die HCl-Beladedauer betrug zwischen 15 und 31 min. Bei jedem Zyklus wurde über den HCl-Durchbruch (ca. 10 min) hinaus beladen. Beladung und Dechlorierung erfolgten isotherm. Die ersten 3 Zyklen wurden bei 440°C, die nächsten 2 Zyklen bei 425°C und die letzten 3 Zyklen bei 460°C gefahren.

Die bei der Regenerierung des vorhergehenden Zyklus entstandenen Kupfer- und Eisenoxide bzw. Oxichloride nehmen bei der Chlorierung sehr rasch HCl auf und wandeln sich in die Chloride (CuCl₂ und FeCl₃) um. Dabei läuft eine mehr oder weniger scharfe HCl-Front durch das Reaktionsrohr, bis HCl am Reaktorausgang durchbricht. Bei Fortsetzung der Beladung waren die entstandenen Cu- und Fe-Chloride dem kontinuierlich strömenden HCl-Gasfluß ausgesetzt, wurden teilweise ausgetragen und in der SiC-Nachschüttung, die sich in einer kühleren Zone außerhalb des Salzbades befand, wieder abgeschieden.

Die chemische Analyse der Reaktorausbauprobe ist aus Tabelle 1 ersichtlich.

**Tabelle 1**

| Orginalkatalysator | Katalysator Ausbau nach 8 Zyklen |
|---|---|
| 5,4 Gew.-% Kupfer | 0,32 Gew.-% Kupfer |
| 7,9 Gew.-% Eisen | 6,9 Gew.-% Eisen |

Der mit CuCl₂ beladene SiC-Träger der Nachschüttung kann als Ausgangsmaterial für die Präparation eines neuen Cu-haltigen Katalysators verwendet werden. Alternativ kann das Cu, da CuCl₂ wasserlöslich ist, durch Auswaschen auf einfache Weise selektiv zurückgewonnen werden. Auslaugen des Orginalkatalysators würde dagegen nur zu einer gemischten Cu-Fe-Lösung führen.

### Beispiel 5

### Kupferaustrag in Luft

Der Katalysator E wurde in 100°C-Schritten im Temperaturbereich von 350 bis 850°C in Luft calciniert und das Ausmaß des Cu-Austrags festgestellt. Die Ergebnisse der chemischen Analyse sind in Tabelle 2 zusammengestellt.

**Tabelle 2**

| Calciniertemperatur [°C] | Kupfer-Gehalt [Gew.-%] |
|---|---|
| 350 | 8,4 |
| 450 | 8,4 |
| 550 | 8,4 |
| 650 | 8,2 |
| 750 | 7,7 |
| 850 | 6,6 |

Merklicher Kupferverlust trat erst oberhalb 650°C auf.

### Beispiel 6

### Antimonaustrag in HCl-Atmosphäre

Über den Katalysator F wurde ein trockener 25 %iger HCl-Gasstrom in N₂ bei 365°C für 21 min geleitet und anschließend für 6 min mit N₂ gespült. Danach wurde bei 365°C für 165 min mit Luft regeneriert. Während der HCl-Beladung fand ein starker Druckanstieg nach dem Reaktor statt. Der Katalysator war an Antimon verarmt. Der Antimonaustrag wurde in einer Kühlfalle ausgefroren.

## Patentansprüche

1. Verfahren zur Rückgewinnung von Aktivkomponenten aus Trägerkatalysatoren unter Erhalt des Trägers in seiner ursprünglichen Form, **dadurch gekennzeichnet, daß** man
a) Trägerkatalysatoren mit Aktivkomponenten aus der Gruppe Silber, Yttrium, Zinn, Zink, Indium, Antimon, Niob oder deren Gemische oder
b) Trägerkatalysatoren mit Aktivkomponenten aus der Gruppe Kupfer, Eisen, Ruthenium, Cer, Wismut, Nickel, Cobalt, Gallium, Neodym, Vanadin, Molybdän, Titan, Zirkon, Wolfram, Platin, Palladium, Antimon, Silber, Yttrium, Zinn, Zink, Indium, Niob, Mangan, Chrom, Lanthan oder deren Gemische mit 0 bis 0,5 Vol.-% Sauerstoff
mit einem 0 bis 2 Gew.-% Wasser enthaltenden Halogenwasserstoffgas bei Temperaturen von 20 bis 900°C und einem Druck von 0,01 bis 10 bar umsetzt und gegebenenfalls fraktionierend bei Temperaturen von 50 bis 900°C und einem Druck von 0,001 bis 5 bar trennt.

2. Verfahren zur Rückgewinnung von Aktivkomponenten aus Trägerkatalysatoren nach Anspruch 1, **dadurch gekennzeichnet, daß** man die Umsetzung mit Halogenwasserstoff und die gegebenenfalls fraktionierende Trennung in einem simultanen Schritt oder in zwei räumlich oder zeitlich getrennten Schritten durchführt.

3. Verfahren zur Rückgewinnung von Aktivkomponenten aus Trägerkatalysatoren nach den Ansprüchen 1 bis 2, **dadurch gekennzeichnet, daß** man als Halogenwasserstoff Chlorwasserstoff einsetzt.

4. Verfahren zur Rückgewinnung von Aktivkomponenten aus Trägerkatalysatoren nach den Ansprüchen 1 bis 3, **dadurch gekennzeichnet, daß** die Aktivkomponenten in metallischer oder oxidischer Form vorliegen.

5. Verfahren zur Rückgewinnung von Aktivkomponenten aus Trägerkatalysatoren nach den Ansprüchen 1 bis 4, **dadurch gekennzeichnet, daß** man die Aktivkomponenten in die oxidische Form überführt.

6. Verfahren zur Rückgewinnung von Aktivkomponenten aus Trägerkatalysatoren nach den Ansprüchen 1 bis 5, **dadurch gekennzeichnet, daß** der Träger aus SiO₂, Al₂O₃, TiO₂, ZrO₂, SiC, Si₃N₄, Zeolithen, hydrothermal hergestellten Phosphaten, Tonen, Pillared Clays, Silikaten oder deren Gemischen besteht.

## Claims

1. A process for recovering active components from supported catalysts with retention of the support in its original form, wherein
a) supported catalysts having active components selected from the group consisting of silver, yttrium, tin, zinc, indium, antimony, niobium and mixtures thereof or
b) supported catalysts having active components selected from the group consisting of copper, iron, ruthenium, cerium, bismuth, nickel, cobalt, gallium, neodymium, vanadium, molybdenum, titanium, zirconium, tungsten, platinum, palladium, antimony, silver, yttrium, tin, zinc, indium, niobium, manganese, chromium, lanthanum and mixtures thereof with from 0 to 0.5% by volume of oxygen,
are reacted with a hydrogen halide as comprising from 0 to 2% by weight of water at from 20 to 900°C and from 0.01 to 10 bar and, if required, subjected to fractional separation at from 50 to 900°C and from 0.001 to 5 bar.

2. A process for recovering active components from supported catalysts as claimed in claim 1, wherein the reaction with hydrogen halide and any fractional separation are carried out in a simultaneous step or in two steps separated with regard to space or time.

3. A process for recovering active components from supported catalysts as claimed in claims 1 and 2, wherein the hydrogen halide used is hydrogen chloride.

4. A process for recovering active components from supported catalysts as claimed in any of claims 1 to 3, wherein the active components are present in metallic or oxidic form.

5. A process for recovering active components from supported catalysts as claimed in any of claims 1 to 4, wherein the active components are converted into the oxidic form.

6. A process for recovering active components from supported catalysts as claimed in any of claims 1 to 5, wherein the carrier consists of SiO₂, Al₂O₃, TiO₂, ZrO₂, SiC, Si₃N₄, zeolites, hydrothermally prepared phosphates, clays, pillared clays, silicates or mixtures thereof.

## Revendications

1. Procédé de récupération de composants actifs de catalyseurs sur support avec conservation du support dans sa forme initiale, **caractérisé en ce que** l'on fait réagir à des températures de 20 à 900 °C et sous une pression de 0,01 à 10 bars
a) des catalyseurs sur support contenant des composants actifs du groupe constitué de l'argent, de l'yttrium, de l'étain, du zinc, de l'indium, de l'antimoine, du niobium et de leurs mélanges, ou
b) des catalyseurs sur support contenant des composants actifs du groupe constitué du cuivre, du fer, du ruthénium, du cérium, du bismuth, du nickel, du cobalt, du gallium, du néodyme, du vanadium, du molybdène, du titane, du zircon, du tungstène, du platine, du palladium, de l'antimoine, de l'argent, de l'yttrium, de l'étain, du zinc, de l'indium, du niobium, du manganèse, du chrome, du lanthane et de leurs mélanges avec de 0 à 0,5 % en volume d'oxygène,
avec un gaz d'halogénure d'hydrogène contenant de 0 à 2 % en poids d'eau, et on les sépare, éventuellement avec fractionnement, à des températures de 50 à 900 °C et sous une pression de 0,001 à 5 bars.

2. Procédé de récupération de composants actifs de catalyseurs sur support selon la revendication 1, **caractérisé en ce que** l'on conduit la réaction avec l'halogénure d'hydrogène et la séparation éventuellement fractionnée dans une étape simultanée ou dans deux étapes séparées dans le temps ou dans l'espace.

3. Procédé de récupération de composants actifs de catalyseurs sur support selon les revendications 1 à 2, **caractérisé en ce que** comme halogénure d'hydrogène, on utilise du chlorure d'hydrogène.

4. Procédé de récupération de composants actifs de catalyseurs sur support selon les revendications 1 à 3, **caractérisé en ce que** les composants actifs sont présents sous forme métallique ou oxydée.

5. Procédé de récupération de composants actifs de catalyseurs sur support selon les revendications 1 à 4, **caractérisé en ce que** l'on amène les composants actifs sous forme oxydée.

6. Procédé de récupération de composants actifs de catalyseurs sur support selon les revendications 1 à 5, **caractérisé en ce que** le support est constitué de SiO₂, d'Al₂O₃, de TiO₂, de ZrO₂, de SiC, de Si₃N₄, de zéolithes, de phosphates préparés par voie hydrothermique, d'argiles, d'argiles latéritiques, de silicates ou de leurs mélanges.
